# EUROPÄISCHE PATENTANMELDUNG

(11) **EP 4 421 403 A1**
(43) Veröffentlichungstag der Anmeldung: **28.08.2024**
(21) Anmeldenummer: 23157957.4
(22) Anmeldetag: 22.02.2023
(51) Int. Cl.: F24H 1/10, F24H 9/20, F24H 15/168, F24H 15/20, F24H 15/31, H04L 12/28, H04J 3/14

(54) **DURCHLAUFERHITZER, VERFAHREN UND DURCHLAUFERHITZERANORDNUNG ZUR WARMWASSER-BEREITUNG**

(71) Anmelder: Gerdes Holding GmbH & Co. KG, 21337 Lüneburg (DE)
(72) Erfinder: Günzl, Manfred, 21337 Lüneburg (DE); Rücker, Christoph, 21272 Egestorf (DE); Gerdes, Jörg, 21407 Deutsch Evern (DE)
(74) Vertreter: Stork Bamberger Patentanwälte PartmbB

(57) **Zusammenfassung**

Die Erfindung betrifft einen Durchlauferhitzer (18) zur Warmwasserbereitung und zeichnet sich dadurch aus, dass eine Steuereinrichtung (15) eingerichtet ist, die von einer Heizeinrichtung (13) aufgenommene elektrische Leistung zu ermitteln und, dass die Steuereinrichtung (15) mindestens eine zur Kommunikation mit weiteren Durchlauferhitzern (19) und/oder einer Laststeuerzentrale (20) eingerichtete Schnittstelle umfasst und ausgebildet ist, die von den weiteren Durchlauferhitzern (19) aufgenommene elektrische Fremdleistung und/oder die mittels der Laststeuerzentrale (20) ermittelte elektrische Fremdleistung zu ermitteln und die Steuereinrichtung (15) eine Gesamtleistungsermittlungseinheit umfasst, die eingerichtet ist, die Summenleistung aus der von der Heizeinrichtung (13) aufgenommenen elektrischen Leistung sowie der Summe der Fremdleistungen zu bestimmen und, die Steuereinrichtung (15) eine Begrenzereinheit umfasst, die eingerichtet ist, falls die Summenleistung eine vorgegebene Maximalleistung überschreitet, ein Motorventil zum Reduzieren der Wasserdurchflussmenge anzusteuern und über die Steuereinrichtung (15) die Heizleistung der Heizeinrichtung (13) zu reduzieren. Die Erfindung betrifft auch eine Anordnung mit mindestens zwei der Durchlauferhitzer sowie ein Verfahren zum Betreiben der Durchlauferhitzer.

## Beschreibung

Die vorliegende Erfindung betrifft einen Durchlauferhitzer zur Warmwasserbereitung, umfassend eine Kanalanordnung mit einem Wasserzulauf, der zum Anschluss an eine wasserzuführende Wasserleitung eingerichtet ist, und mit einem Wasserablauf, der zum Anschluss an eine wasserabführende Wasserleitung eingerichtet ist, eine zum Erwärmen von durch die Kanalanordnung in Durchflussrichtung fließendem Wasser eingerichtete elektrische Heizeinrichtung, eine zum Steuern der Heizleistung der Heizeinrichtung ausgebildete elektronische Steuereinrichtung sowie ein in dem Wasserzulauf angeordnetes und zur steuervariablen Begrenzung der Wasserdurchflussmenge eingerichtetes, mittels der Steuereinrichtung ansteuerbares Motorventil mit einem zur Einstellung des Volumenstroms eingerichteten Drosselorgan.

Des Weiteren betrifft die Erfindung eine Anordnung umfassend mindestens zwei Durchlauferhitzer und ein Verfahren zum Betreiben von Durchlauferhitzern zur Warmwasserbereitung, wobei die Durchlauferhitzer jeweils eine Kanalanordnung mit einem Wasserzulauf, der zum Anschluss an eine wasserzuführende Wasserleitung eingerichtet ist, und mit einem Wasserablauf, der zum Anschluss an eine wasserabführende Wasserleitung eingerichtet ist, eine zum Erwärmen von durch die Kanalanordnung in Durchflussrichtung fließendem Wasser eingerichtete elektrische Heizeinrichtung, eine zum Steuern der Heizleistung der Heizeinrichtung ausgebildete elektronische Steuereinrichtung sowie ein in dem Wasserzulauf angeordnetes und zur steuervariablen Begrenzung der Wasserdurchflussmenge eingerichtetes, mittels der Steuereinrichtung ansteuerbares Motorventil mit einem zur Einstellung des Volumenstroms eingerichteten Drosselorgan umfasst.

Derartige Durchlauferhitzer, Anordnungen und Verfahren dienen der Bereitung von Warmwasser, insbesondere zur Erwärmung von Brauchwasser. Das Motorventil mit dem Drosselorgan ist dazu eingerichtet, den Volumenstrom des pro Zeit durch die Heizeinrichtung strömenden Wassers zu begrenzen und einzustellen. So kann beispielsweise die maximale Durchflussmenge bedarfsabhängig begrenzt und voreingestellt werden, um den Durchlauferhitzer an die gewünschte Wasserdurchflussmenge der am Wasserablauf angeschlossenen Zapfstellen anzupassen. Entsprechend der maximalen Durchflussmenge kann auf diese Weise auch die Heizleistung des Durchlauferhitzers eingestellt werden. So ist es möglich, beispielsweise einen Durchlauferhitzer mit einer maximalen Nennleistung von 22 kW auf geringere Durchflussmengen einzustellen und dessen Heizleistung entsprechend dieser reduzierten Durchflussmenge ebenfalls zu reduzieren.

Heutzutage werden regelmäßig in Gebäuden eine Vielzahl an Durchlauferhitzern vorgesehen. Insbesondere setzt sich verstärkt durch, jeweils einen Durchlauferhitzer vor jeder Zapfstelle anzuordnen. Die damit im Gebäude installierte Summennennleistung sämtlicher installierter Durchlauferhitzer überschreitet damit regelmäßig die netzseitig verfügbare maximale Anschlussleistung bei Weitem. Werden eine Vielzahl von Zapfstellen, beispielsweise in einem Hotelgebäude morgens, zeitgleich geöffnet und erwärmtes Brauchwasser gezapft, kann die Summe der mittels der Durchlauferhitzer aufgenommenen Leistung, die auch als Spitzenlastleistung bezeichnet wird, die netzseitig verfügbare maximale Anschlussleistung überschreiten.

Die Problematik der gleichzeitigen Leistungsaufnahme durch die Zusammenschaltung einer Vielzahl von elektrischen Verbrauchern ist aus dem Stand der Technik hinlänglich bekannt. Um einer Überlastung des elektrischen Anschlusses zu begegnen, werden regelmäßig Lastmanagement-Systeme verwandt, die mit den einzelnen Verbrauchern vernetzt sind und deren Lastaufnahme derart regeln und/oder steuern, dass die maximal zur Verfügung stehende netzseitige Anschlussleistung nicht überschritten wird.

Ein solches Lastmanagement-System geht beispielsweise aus dem Dokument US 2011 / 0264932 A1 hervor. Aus dem Dokument geht hervor, eine Reihe elektrischer Verbraucher in einem Haushalt, wie Klimaanlagen, Kühlschränke, Radio- und Fernsehgeräte, Computer usw. zu erfassen und ggf. zu steuern. Mittels einer Steuerung wird im Falle einer zu erwartenden zu hohen elektrischen Leistungsaufnahme die von den Verbrauchern aufgenommene elektrische Leistung entsprechend reduziert. Beispielsweise durch Erhöhen der Zieltemperatur einer Klimaanlage oder der Vorgabe einer geringeren Solltemperatur von Warmwasserbereitern.

Gerade eine Reduktion der Solltemperatur von Warmwasserbereitern wird von Anwendern unmittelbar wahrgenommen und als Komforteinbuße registriert. Verringert sich beispielsweise beim Duschen die Wassertemperatur nur um wenige Grad, ist dies sofort spürbar.

Es ist daher Aufgabe der vorliegenden Erfindung einen Durchlauferhitzer vorzuschlagen, der bei gleichzeitigem Betrieb mit weiteren Durchlauferhitzern und/oder anderen elektrischen Verbrauchern sicherstellt, dass die Summe der von allen Geräten aufgenommenen elektrischen Leistung eine vorgegebene maximale Anschlussleistung nicht übersteigt und zugleich maximalen Komfort gewährleistet. Des Weiteren ist es Aufgabe eine Anordnung mit solchen Durchlauferhitzern sowie ein entsprechendes Verfahren vorzugschlagen.

Die Aufgabe wird durch einen Durchlauferhitzer mit den eingangs genannten Merkmalen dadurch gelöst, dass die Steuereinrichtung eingerichtet ist, die von der Heizeinrichtung aufgenommene elektrische Leistung zu ermitteln und, dass die Steuereinrichtung mindestens eine zur Kommunikation mit weiteren Durchlauferhitzern und/ oder Laststeuerzentralen eingerichtete Schnittstelle umfasst und ausgebildet ist, die von den weiteren Durchlauferhitzern aufgenommene elektrische Fremdleistung und/oder die mittels der Laststeuerzentrale ermittelte elektrische Fremdleistung über die Schnittstelle zu ermitteln und die Steuereinrichtung eine Gesamtleistungsermittlungseinheit umfasst, die eingerichtet ist, die Summenleistung aus der von der Heizeinrichtung aufgenommenen elektrischen Leistung sowie die Summe der Fremdleistungen zu bestimmen und die Steuereinrichtung eine Begrenzereinheit umfasst, die eingerichtet ist, falls die Summenleistung eine vorgegebene Maximalleistung überschreitet, das Motorventil zum Reduzieren der Wasserdurchflussmenge anzusteuern und über die Steuereinrichtung die Heizleistung der Heizeinrichtung zu reduzieren.

Dies bietet den Vorteil, dass im Falle einer erforderlichen Reduktion der Leistungsaufnahme jedenfalls zunächst die Temperatur des erwärmten Wassers nicht reduziert wird. Vielmehr wird erfindungsgemäß zunächst der Wasserdurchfluss mittels des Motorventils und des Drosselorgans reduziert, um unter Beibehaltung der bisherigen Wassertemperatur die elektrische Leistungsaufnahme des Durchlauferhitzers zu reduzieren. Auf diese Weise wird einerseits die vom Durchlauferhitzer aufgenommene elektrische Nennleistung im Fall einer festgestellten, die zulässige Anschlussleistung übersteigenden Maximalleistung, reduziert. Dies erfolgt jedoch unter Beibehaltung der Solltemperatur des erwärmten Brauchwassers. Die Reduktion der Wasserdurchflussmenge ist für den Anwender weniger spürbar, als die aus dem Stand der Technik bekannte Reduktion der Wassertemperatur. Druckschwankungen im Brauchwassersystem treten häufig lastsituationsabhängig auf und werden vom Anwender nicht als Komfortnachteil wahrgenommen.

Der erfindungsgemäße Durchlauferhitzer bietet also selbst im Fall einer erforderlichen Reduktion der elektrischen Leistungsaufnahme den Vorteil eines hohen Komforts für den Anwender. Während die aus dem Stand der Technik bekannten Systeme zur Reduktion der aufgenommenen elektrischen Leistung zur Brauchwassererwärmung unmittelbar die Solltemperaturvorgabe reduzieren, erfolgt erfindungsgemäß im Fall einer erforderlichen Reduktion der elektrischen Leistungsaufnahme des Durchlauferhitzers zunächst eine Drosselung der Wasserdurchflussmenge. Aufgrund der vergleichsweise geringeren Wasserdurchflussmenge ist es möglich, die elektrische Leistungsaufnahme der Heizelemente unter Beibehaltung einer konstanten Wassertemperatur entsprechend zu reduzieren.

Eine zweckmäßige Ausgestaltung der Erfindung ist dadurch gekennzeichnet, dass die Steuereinrichtung ausgebildet ist, die Heizleistung derart zu reduzieren, dass die Wassertemperatur des erwärmten Wassers bei reduzierter Wasserdurchflussmenge einer voreingestellten Solltemperatur entspricht. Vorteilhafterweise wird so die Wassertemperatur auf konstantem Niveau gehalten, sodass der Anwender keine Temperaturschwankungen feststellt. Für den Anwender bietet der erfindungsgemäße Durchlauferhitzer daher auch bei einer erforderlichen Reduktion der aufgenommenen elektrischen Leistung stets einen hohen Komfort. Eine geringfügige Reduktion der Wassermenge wird im Gegensatz zu der aus dem Stand Technik bekannten Reduktion der Brauchwassertemperatur anwenderseitig nicht oder kaum wahrgenommen.

Eine bevorzugte Weiterbildung der Erfindung zeichnet sich dadurch aus, dass die Steuereinrichtung ausgebildet ist, zunächst die Heizleistung derart zu reduzieren, dass die Wassertemperatur des erwärmten Wassers bei reduzierter Wasserdurchflussmenge der voreingestellten Solltemperatur entspricht und falls die reduzierte Wasserdurchflussmenge eine vorgegebene Mindestdurchflussmenge unterschreitet, schrittweise die Heizleistung unter Absenkung der Wassertemperatur des erwärmten Wassers unter die voreingestellte Solltemperatur zu reduzieren. Anders ausgedrückt ist die Steuereinrichtung ausgebildet, in einem ersten Schritt unter Beibehaltung der vorgestellten Solltemperatur die Wasserdurchflussmenge zu reduzieren. Eine solche Reduktion der Wasserdurchflussmenge ist so lange möglich, bis die Wasserdurchflussmenge die genannte vorgegebene Mindestdurchflussmenge unterschreitet.

Die Aufrechterhaltung eines Mindestvolumenstromes bzw. der vorgegebenen Mindestdurchflussmenge dient der Sicherstellung einer luft- und/oder gasblasenfreien Durchströmung der Heizkanäle. Reicht die Reduktion der Wasserdurchflussmenge auf diese vorgegebene Mindestdurchflussmenge nicht aus, um die elektrische Leistungsaufnahme weit genug zu reduzieren, so ist die Steuereinrichtung ausgebildet, in einem zweiten Schritt zusätzlich die Wassertemperatur des erwärmten Wassers unter die voreingestellte Solltemperatur zu reduzieren. Die Steuereinrichtung ist folglich ausgebildet, vorrangig die Wassertemperatur des erwärmten Wassers konstant zu halten. Die Konstanthaltung der Wassertemperatur bei gleichzeitiger Reduktion der aufgenommenen elektrischen Leistung wird zunächst durch die zuvor beschriebene Reduktion der Wasserdurchflussmenge erreicht. Erst wenn die Wasserdurchflussmenge aufgrund Erreichens der vorgegebenen Mindestdurchflussmenge nicht mehr weiter reduziert werden kann, wird mittels der Steuereinrichtung als Sekundärmaßnahme nun auch die Wassertemperatur des erwärmten Wassers reduziert, um die Leistungsaufnahme des Durchlauferhitzers weiter zu reduzieren.

Eine weitere zweckmäßige Ausgestaltung der Erfindung ist dadurch gekennzeichnet, dass die Steuereinrichtung ausgebildet ist, über die Schnittstelle von mindestens einem der weiteren Durchlauferhitzer und/oder einer Laststeuerzentrale ein Leistungsreduktionsanforderungssignal zu erhalten und ausgebildet ist, auf Basis des Leistungsreduktionsanforderungssignals das Motorventil zum Reduzieren der Wasserdurchflussmenge sowie zum Reduzieren der Heizleistung der Heizeinrichtung anzusteuern. Vorteilhafterweise ist die Erfindung gemäß Durchlauferhitzer auf diese Weise mit mindestens einem weiteren Durchlauferhitzer vernetzt ausgebildet. Auch ist es möglich, dass die Erfindung gemäß Durchlauferhitzer mit der Schnittstelle an einer Laststeuerzentrale angeschlossen ist. Erfindungsgemäß ist auch vorgesehen, dass mehr als zwei der Durchlauferhitzer miteinander über die Schnittstelle vernetzt oder zusammen mit der Laststeuerzentrale ein gemeinsames Netzwerk bilden. Innerhalb dieses gemeinsamen Netzes können die genannten Leistungsreduktionsanforderungssignale zwischen den genannten Geräten ausgetauscht werden. Jeder der erfindungsgemäßen Durchlauferhitzer ist dazu eingerichtet, basierend auf einem erhaltenen Leistungsreduktionsanforderungssignal mittels des Motorventils die Wasserdurchflussmenge sowie die Heizleistung der Heizeinrichtung wie zuvor beschrieben zu reduzieren.

Gemäß einer weiteren bevorzugten Ausführungsform ist die Schnittstelle weiter ausgebildet, Verbrauchsdaten mindestens eines der weiteren Durchlauferhitzer an mindestens einen anderen der weiteren Durchlauferhitzer weiterzuleiten. Vorteilhafterweise werden so die Verbrauchsdaten zwischen den erfindungsgemäßen Durchlauferhitzern ausgetauscht und übermittelt. Bei den Verbrauchsdaten kann es sich beispielsweise um die aktuell aufgenommene elektrische Leistung, die zu erwartende elektrische Leistungsaufnahme, die Fremdleistungsaufnahme der anderen Durchlauferhitzer und/oder weitere elektrische Verbraucher handeln.

Eine weitere zweckmäßige Ausbildung der Erfindung ist dadurch gekennzeichnet, dass die Steuereinrichtung ausgebildet ist, während eines Einrichtbetriebs die zu einer Verbrauchsgruppe zugehörigen Durchlauferhitzer festzulegen und auf Basis der Einzelnennleistungen die vorgegebene Maximalleistung festzulegen. Vorzugsweise wird so mittels der Steuereinrichtung die vorgegebene Maximalleistung während des Einrichtbetriebs halb- oder vollautomatisch vorgegeben und der jeweiligen Verbrauchsgruppe zugeordnet.

Eine weitere zweckmäßige Ausgestaltung der Erfindung ist dadurch gekennzeichnet, dass die Steuereinrichtung ausgebildet ist, die festgelegte vorgegebene Maximalleistung über die Schnittstelle an die weiteren Durchlauferhitzer zu kommunizieren. Vorteilhafterweise wird die zuvor festgelegte vorgegebene maximale Leistung an alle Durchlauferhitzer einer Verbrauchsgruppe über die Schnittstelle übermittelt.

Des Weiteren wird die Aufgabe durch eine entsprechende Anordnung mit den eingangs genannten Merkmalen dadurch gelöst, dass die mindestens zwei Durchlauferhitzer zum Datenaustausch über deren Schnittstellen miteinander gekoppelt sind. Auf diese Weise sind die erfindungsgemäßen Durchlauferhitzer eingerichtet, über deren Schnittstellen alle erforderlichen Daten auszutauschen, die erforderlich sind, um selbsttätig die zuvor beschriebene Reduktion der elektrischen Leistungsaufnahme vorzunehmen, falls die Leistungsaufnahme einer der Verbrauchsgruppen die vorgegebene maximale Leistung überschreiten würde.

Weiterhin wird die Aufgabe durch ein entsprechendes Verfahren mit den eingangs genannten Merkmalen durch Ermitteln der von der Heizeinrichtung aufgenommenen elektrischen Leistung mittels der Steuereinrichtung und Kommunizieren mit weiteren Durchlauferhitzern und/oder mit einer zentralen Laststeuerzentrale über mindestens eine hierzu eingerichtete Schnittstelle gelöst, um die von den weiteren Durchlauferhitzern aufgenommene elektrische Fremdleistung und/oder die mittels der Laststeuerzentrale ermittelte elektrische Fremdleistung zu ermitteln, Ermitteln der Summenleistung aus der von der Heizeinrichtung aufgenommenen elektrischen Leistung sowie der Summe der Fremdleistungen mittels einer Gesamtleistungsermittlungseinheit der Steuereinheit, Reduzieren der Wasserdurchflussmenge durch Ansteuern des Motorventils mittels einer Begrenzereinheit der Steuereinrichtung und Reduzieren der Heizleistung der Heizeinrichtung mittels der Steuereinrichtung, falls die Summenleistung eine vorgegebene Maximalleistung überschreitet.

Die mit der erfindungsgemäßen Anordnung sowie dem erfindungsgemäßen Verfahren einhergehenden Vorteile entsprechen in analoger Weise den zuvor im Zusammenhang mit der erfindungsgemäßen Vorrichtung genannten Vorteile. Auf diese wird daher zur Vermeidung von Wiederholungen vollumfänglich verwiesen und im Folgenden im Zusammenhang mit dem erfindungsgemäßen Verfahren ergänzend lediglich zu ausgewählten Aspekten im weiteren Stellung genommen.

Eine weitere zweckmäßige Ausbildung der Erfindung ist gekennzeichnet durch Reduzieren der Heizleistung mittels der Steuereinrichtung derart, dass die Wassertemperatur des erwärmten Wassers bei reduzierter Wasserdurchflussmenge einer voreingestellten Solltemperatur entspricht.

Eine weitere zweckmäßige Ausbildung der Erfindung ist durch anfängliches Reduzieren der Heizleistung mittels der Steuereinrichtung derart, dass die Wassertemperatur des erwärmten Wassers bei reduzierter Wasserdurchflussmenge der voreingestellten Solltemperatur entspricht und, falls die reduzierte Wasserdurchflussmenge eine vorgegebene Mindestdurchflussmenge unterschreitet, schrittweisess Reduzieren der Heizleistung unter Absenkung der Wassertemperatur des erwärmten Wassers unter die voreingestellte Solltemperatur gekennzeichnet.

Eine bevorzugte Weiterbildung der Erfindung zeichnet sich durch Verarbeiten eines über die Schnittstelle von mindestens einem der weiteren Durchlauferhitzer und/oder einer Laststeuerzentrale eingehendes Leistungsreduktionsanforderungssignal und Reduzieren der Wasserdurchflussmenge mittels des Motorventils und Reduzieren der Heizleistung der Heizeinrichtung auf Basis des Leistungsreduktionsanforderungssignals aus.

Eine zweckmäßige Ausgestaltung der Erfindung ist durch Weiterleiten von Verbrauchsdaten mindestens eines der weiteren Durchlauferhitzer an mindestens einen anderen der weiteren Durchlauferhitzer mittels der Schnittstelle gekennzeichnet.

Eine bevorzugte Weiterbildung der Erfindung zeichnet sich durch Festlegen der zu einer Verbrauchsgruppe zugehörigen Durchlauferhitzer während eines Einrichtbetriebs und Festlegen der vorgegebenen Maximalleistung auf Basis der Einzelnennleistungen aus.

Eine weitere zweckmäßige Ausgestaltung der Erfindung ist durch Kommunizieren der festgelegten vorgegebenen Maximalleistung über die Schnittstelle an die weiteren Durchlauferhitzer gekennzeichnet.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung eines erfindungsgemäßen Durchlauferhitzers,
- Fig. 2: ein Blockdiagramm mit mehreren erfindungsgemäßen Durchlauferhitzern
und
- Fig. 3: ein Flussdiagramm zur Funktionsweise der Reduktion der elektrischen Leistungsaufnahme.

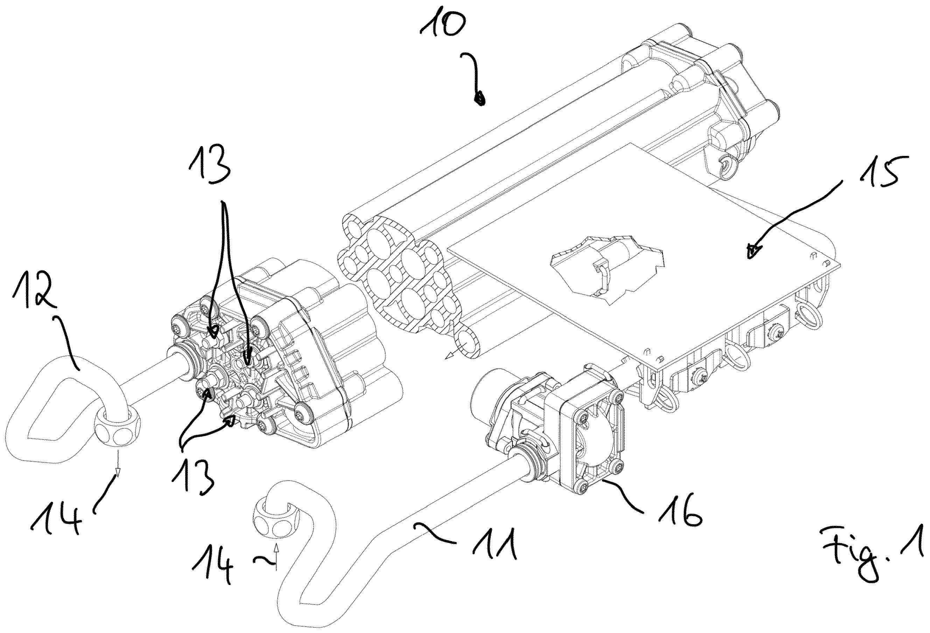

Figur 1 zeigt schematisch einen erfindungsgemäßen Durchlauferhitzer 18. Der Durchlauferhitzer 18 umfasst eine Kanalanordnung 10 mit einem Wasserzulauf 11. Der Wasserzulauf 11 ist zum Anschluss an eine - in der Zeichnung nicht gezeigte wasserzuführende Wasserleitung - eingerichtet. Weiter weist die Kanalanordnung 10 einen Wasserablauf 12 auf, der zum Anschluss an eine - in der Zeichnung nicht gezeigte - wasserabführende Wasserleitung eingerichtet ist.

Weiter umfasst der erfindungsgemäße Durchlauferhitzer 18 eine elektrische Heizeinrichtung 13, die zum Erwärmen von durch die Kanalanordnung 10 in Durchflussrichtung 14 fließendem Wasser eingerichtet ist. Die Heizleistung der Heizeinrichtung 13 wird mittels einer hierzu eingerichteten elektronischen Steuereinrichtung 15 gesteuert.

Zur steuervariablen Begrenzung der Wasserdurchflussmenge durch die Kanalanordnung 10 ist in dem Wasserzulauf 11 oder einem Abschnitt der Kanalanordnung 10 vor der Heizeinrichtung ein Motorventil 16 mit einem zur Einstellung des Volumenstroms eingerichteten - in der Zeichnung nicht gezeigten - Drosselorgan 17 angeordnet. Das Motorventil 16 ist zur steuervariablen Begrenzung der Wasserdurchflussmenge eingerichtet und mittels der Steuereinrichtung 15 ansteuerbar ausgebildet.

Die Steuereinrichtung 15 ist eingerichtet, die von der Heizeinrichtung 13 aufgenommene elektrische Leistung zu ermitteln. Die Ermittlung der von der Heizeinrichtung 13 aufgenommenen elektrischen Leistung kann auf verschiedene Weise mittels der Steuereinrichtung 15 erfolgen. Die Steuereinrichtung 15 ist beispielsweise eingerichtet auf Basis der Ansteuerung der Heizeinrichtung die jeweilige von der Heizeinrichtung 13 aufgenommene elektrische Leistung durch Berechnung zu schätzen. Vorzugsweise wird die elektrische Leistung durch Zählen von Netzhalbwellen über die Zeit ermittelt. Alternativ umfasst die Steuereinrichtung 15 Leistungsmessmittel, beispielsweise Strom- und Spannungsgeber, die eingerichtet sind, die an der Heizeinrichtung 13 anliegende Versorgungsspannung sowie den von der Heizeinrichtung 13 aufgenommenen Strom zu messen und auf Basis dieser Messwerte die von der Heizeinrichtung 13 aufgenommene elektrische Leistung zu ermitteln.

Gemäß einer vorteilhaften Ausführung der Erfindung ist die Steuereinrichtung 15 ausgebildet, die von der Heizeinrichtung 13 aufgenommene elektrische Leistung über an das Wasser abgegebene thermische Leistung zu berechnen oder abzuschätzen. Hierzu ist die Steuereinrichtung 15 ausgebildet, die Differenztemperatur zwischen der Auslauf- und Einlauftemperatur zu ermitteln. Unter Berücksichtigung der Durchflussmenge sowie des Gesamtwirkungsgrades der Heizeinrichtung 13 kann mittels der Steuereinrichtung 15 auf die aufgenommene elektrische Leistung rückgeschlossen werden.

Vorzugsweise weist die Steuereinrichtung 15 mindestens eine zur Kommunikation mit weiteren Durchlauferhitzern 19 und oder einer Laststeuerzentrale 20 eingerichtete - in der Zeichnung nicht gezeigte - Schnittstelle auf. Die Schnittstelle ist eingerichtet, die von den weiteren Durchlauferhitzern 19 aufgenommene elektrische Fremdleistung und/oder die mittels der Laststeuerzentrale 20 ermittelte elektrische Fremdleistung(en) zu ermitteln.

Die Steuereinrichtung 15 umfasst eine - in der Zeichnung nicht separat gezeigte - Gesamtleistungsermittlungseinheit. Diese ist eingerichtet, die Summenleistung aus der von der Heizeinrichtung 13 aufgenommenen elektrischen Leistung sowie die Summe der Fremdleistungen, also diejenige elektrische Leistung, die von den weiteren Durchlauferhitzern 19 aufgenommen wird, zu bestimmen. Weiter weist die Steuereinrichtung eine - in der Zeichnung nicht dargestellte - Begrenzereinheit auf, die eingerichtet ist, falls die Summenleistung eine vorgegebene Maximalleistung überschreitet, das Motorventil 16 anzusteuern, um über die Steuereinrichtung die Heizleistung der Heizeinrichtung 13 zu reduzieren.

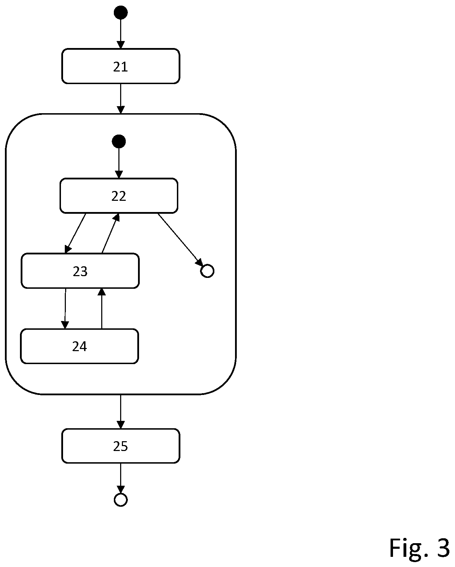

Anhand des in Fig. 3 gezeigten Flussdiagramms wird die Funktionsweise der Steuereinrichtung 15, die erfindungsgemäße Anordnung sowie das erfindungsgemäße Verfahren im Folgenden weiter erläutert. Vorzugsweise ist die Steuereinrichtung 15 ausgebildet, die Leistungsaufnahme der Heizeinrichtung 13 derart zu reduzieren, dass die Wassertemperatur des erwärmten Wassers bei reduzierter Wasserdurchflussmenge einer voreingestellten Solltemperatur entspricht. Die Temperatur des erwärmten Wassers wird daher trotz Reduktion der elektrischen Leistung konstant gehalten. Die Steuereinrichtung 15 ist insbesondere ausgebildet, zunächst die Heizleistung, also die von der Heizeinrichtung 13 aufgenommene elektrische Leistung, derart zu reduzieren, dass die Wassertemperatur des erwärmten Wassers bei reduzierter Wasserdurchflussmenge der voreingestellten Solltemperatur entspricht. Erst wenn die reduzierte Wasserdurchflussmenge eine vorgegebene Mindestdurchflussmenge unterschreitet, wird schrittweise die Heizleistung unter Absenkung der Wassertemperatur des erwärmten Wassers unter die voreingestellte Solltemperatur reduziert.

Die Steuereinrichtung 15 durchläuft zunächst nach dem Gerätestart des Durchlauferhitzers einen Initialisierungsschritt 21 und geht sodann in den regulären Betrieb über, bei dem die Heizleistung bis zur regulären Durchlauferhitzernennleistung in Abhängigkeit der gewünschten Wassertemperatur sowie der Durchflussmenge mittels der Steuereinrichtung 15 eingestellt wird. Der Durchlauferhitzer befindet sich im Zustand "volle Leistung" 22. Überschreitet die Summenleistung aus der von der Heizeinrichtung 13 aufgenommenen elektrischen Leistung sowie die Summe der Fremdleistungen die vorgegebene Maximalleistung, so wechselt die Steuereinrichtung 15 in den Zustand "Volumenstrombegrenzung" 23 und reduziert mittels des Motorventils 16 den Volumenstrom durch die Kanalanordnung 10 sowie die Heizleistung, wie zuvor beschrieben. Ist trotz reduzierter Heizleistung die Summenleistung größer als die vorgegebene Maximalleistung, so geht die Steuereinrichtung 15 in den Zustand "Temperaturbegrenzung" 24 über, sofern die reduzierte Wasserdurchflussmenge die vorgegebene Mindestdurchflussmenge unterschreitet. Im Zustand 24 wird schrittweise die Heizleistung unter Absenkung der Wassertemperatur des erwärmten Wassers unter die voreingestellte Solltemperatur reduziert.

Falls die Summenleistung sowohl bei reduzierter Wasserdurchflussmenge als auch reduzierter Wassertemperatur immer noch die vorgegebene Maximalleistung überschreitet, so schaltet die Steuereinrichtung 15 die Heizeinrichtung 13 spannungsfrei. In diesem Zustand entspricht die Auslauftemperatur der Einlauftemperatur. Die Heizeinrichtung 13 ist abgeschaltet. Der Durchlauferhitzer 18 verbleibt solange in diesem Regelbetrieb, bis die Spannungsversorgung im Zustand 25 abgeschaltet wird.

Weiter bevorzugt ist die Steuereinrichtung 15 ausgebildet, über die Schnittstelle von mindestens einem der weiteren Durchlauferhitzer 19 und/oder einer Lastverteilungssteuerung, die auch als Laststeuerzentrale 20 bezeichnet wird, ein Leistungsreduktionsanforderungssignal zu erhalten. Weiter ist die Steuereinrichtung 15 ausgebildet, auf Basis des Leistungsreduktionsanforderungssignals das Motorventil zum Reduzieren der Wasserdurchflussmenge sowie zum Reduzieren der Heizleistung der Heizeinrichtung anzusteuern.

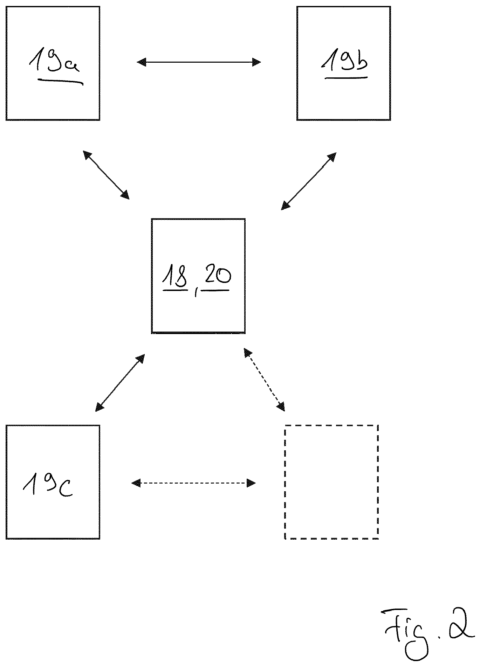

Fig. 2 zeigt beispielhaft einen der erfindungsgemäßen Durchlauferhitzer 18 sowie drei weitere Durchlauferhitzer 19a, 19b, 19c. Statt des Durchlauferhitzers 18 kann alternativ auch die Laststeuerzentrale 20 vorgesehen sein. Erfindungsgemäß ist beispielsweise die Steuereinrichtung 15 des Durchlauferhitzers 18 derart eingerichtet, dass diese die Funktion der Laststeuerzentrale 20 übernimmt. Die Pfeile in Fig. 2 zeigen beispielhaft, dass der Durchlauferhitzer 18 und/oder die Laststeuerzentrale 20 sowie die weiteren Durchlauferhitzer 19a, 19b, 19c über ihre Schnittstellen miteinander kommunizieren, um beispielsweise Daten über aufgenommene elektrische Leistungen, Fremdleistungen und/oder Leistungsreduktionsanforderungssignale untereinander auszutauschen.

Erfindungsgemäß ist die Schnittstelle bevorzugt ausgebildet, Verbrauchsdaten mindestens eines der weiteren Durchlauferhitzer 19a, 19b an mindestens einen anderen der weiteren Durchlauferhitzer 19c weiterzuleiten. Anders ausgedrückt sind sämtliche der Durchlauferhitzer 18, 19a, 19b, 19c ausgebildet und eingerichtet, derartige Verbrauchsdaten, wie die momentane elektrische Leistungsaufnahme, den Wasserdurchfluss, die zu erwartende elektrische Leistungsaufnahme und weitere verbrauchsrelevante Daten untereinander auszutauschen. Jeder der Durchlauferhitzer 18, 19a, 19b, 19c ist also vorzugsweise als Gateway zur Datenweiterleitung ausgebildet. Weiter ist die Steuereinrichtung 15 ausgebildet, auf Basis der Einzelnennleistungen der zu einer Verbrauchsgruppe zugehörenden Durchlauferhitzer 18, 19a, 19b, 19c die vorgegebene Maximalleistung festzulegen. Auch ist es alternativ möglich, die Maximalleistung über eine weitere Instanz, beispielsweise über eine dynamische Leistungsvorgabeeinheit 26, vorzugegeben.

Die vorliegende Erfindung umfasst auch eine Anordnung mit mindestens zwei der zuvor beschriebenen Durchlauferhitzern 18, 19. Diese sind zum Datenaustausch über deren Schnittstellen miteinander gekoppelt. Wie in Fig. 2 gezeigt, ist die Zahl der Durchlauferhitzer nicht auf zwei beschränkt, sondern kann beliebig größer gewählt werden.

Die Erfindung betrifft auch das eingangs genannte Verfahren mit mindestens einem der zuvor beschriebenen Durchlauferhitzer 18, 19. Wie zuvor beschrieben, wird mittels der Steuereinrichtung 15 erfindungsgemäß die von der Heizeinrichtung 15 aufgenommene elektrische Leistung in einem ersten Verfahrensschritt ermittelt. Erfindungsgemäß kommuniziert die Steuereinrichtung 15 des Durchlauferhitzers 18 mit weiteren Durchlauferhitzern 19a, 19b, 19c und/oder mit der zentralen Laststeuerzentrale 20 bzw. Laststeuerung 20 über mindestens eine hierzu eingerichtete Schnittstelle, um die von den weiteren Durchlauferhitzern 19 aufgenommene elektrische Fremdleistung und/oder die mittels der Laststeuerzentrale 20 ermittelte elektrische Fremdleistung zu bestimmen. Mit einer Gesamtleistungsermittlungseinheit wird sodann die Summenleistung aus der von der Heizeinrichtung 13 aufgenommenen elektrischen Leistung sowie der Summe der Fremdleistungen ermittelt, die Teil der Steuereinrichtung 15 ist.

Falls die Summenleistung die vorgegebene Maximalleistung überschreitet, wird die Wasserdurchflussmenge durch Ansteuern des Motorventils 16 mittels einer Begrenzereinheit verringert und mittels der Steuereinrichtung 15 die Heizleistung der Heizeinrichtung 13 reduziert.

Vorzugweise wird die Heizleistung mittels der Steuereinrichtung 15 derart reduziert, dass die Wassertemperatur des erwärmten Wassers bei reduzierter Wasserdurchflussmenge der voreingestellten Solltemperatur entspricht.

Weiter bevorzugt wird die Heizleistung mittels der Steuereinrichtung 15 anfänglich derart reduziert, dass die Wassertemperatur des erwärmten Wassers bei reduzierter Wasserdurchflussmenge der voreingestellten Solltemperatur entspricht und, falls die reduzierte Wasserdurchflussmenge eine vorgegebene Mindestdurchflussmenge unterschreitet, wird die Heizleistung schrittweise unter Absenkung der Wassertemperatur des erwärmten Wassers unter die voreingestellte Solltemperatur reduziert.

Vorzugsweise wird über die Schnittstelle ein von mindestens einem der weiteren Durchlauferhitzer 19a, 19b, 19c und/oder einer Lastverteilungssteuerung bzw. Laststeuerzentrale 20 eingehendes Leistungsreduktionsanforderungssignal verarbeitet und mittels des Motorventils 16 die Wasserdurchflussmenge sowie die Heizleistung der Heizeinrichtung 13 auf Basis des Leistungsreduktionsanforderungssignals entsprechend reduziert.

Weiter bevorzugt werden die Verbrauchsdaten mindestens eines der weiteren Durchlauferhitzer 19a, 19b, 19c an mindestens einen anderen der weiteren Durchlauferhitzer 19c, 19b, 19a mittels der Schnittstelle weitergeleitet. Die Weiterleitung der Verbrauchsdaten erfolgt beispielsweise im Broadcast, d. h. die Verbrauchsdaten jedes Durchlauferhitzers 18, 19 werden an alle anderen Durchlauferhitzer 19, 18 gesendet bzw. von Durchlauferhitzer 18 zu Durchlauferhitzer 19 weitergeleitet.

Gemäß einer weiteren Verfahrensoption wird während eines Einrichtbetriebs zunächst festgelegt, welcher Durchlauferhitzer 18, 19 zu einer Verbrauchsgruppe gehört. Anschließend wird die vorgegebene Maximalleistung für diese Verbrauchsgruppe auf Basis der Einzelnennleistungen der zu der Verbrauchsgruppe gehörenden Durchlauferhitzer 18, 19 festgelegt. Bevorzugt wird die festgelegte vorgegebene Maximalleistung über die Schnittstelle an die weiteren Durchlauferhitzer 19 kommuniziert.

## Patentansprüche

1. Durchlauferhitzer (18) zur Warmwasserbereitung, umfassend
eine Kanalanordnung (10) mit einem Wasserzulauf (11), der zum Anschluss an eine wasserzuführende Wasserleitung eingerichtet ist, und mit einem Wasserablauf (12), der zum Anschluss an eine wasserabführende Wasserleitung eingerichtet ist,
eine zum Erwärmen von durch die Kanalanordnung (10) in Durchflussrichtung (14) fließendem Wasser eingerichtete elektrische Heizeinrichtung (13),
eine zum Steuern der Heizleistung der Heizeinrichtung (13) ausgebildete elektronische Steuereinrichtung (15) sowie
ein in dem Wasserzulauf angeordnetes und zur steuervariablen Begrenzung der Wasserdurchflussmenge eingerichtetes, mittels der Steuereinrichtung (15) ansteuerbares Motorventil (16) mit einem zur Einstellung des Volumenstroms eingerichteten Drosselorgan (17)
**dadurch gekennzeichnet, dass**
die Steuereinrichtung (15) eingerichtet ist, die von der Heizeinrichtung (13) aufgenommene elektrische Leistung zu ermitteln und, dass
die Steuereinrichtung (15) mindestens eine zur Kommunikation mit weiteren Durchlauferhitzern (19) und/oder Laststeuerzentrale (20) eingerichtete Schnittstelle umfasst und ausgebildet ist, die von den weiteren Durchlauferhitzern (19) aufgenommene elektrische Fremdleistung und/oder die mittels der Laststeuerzentrale (20) ermittelte elektrische Fremdleistung über die Schnittstelle zu ermitteln und
die Steuereinrichtung (15) eine Gesamtleistungsermittlungseinheit umfasst, die eingerichtet ist, die Summenleistung aus der von der Heizeinrichtung (13) aufgenommenen elektrischen Leistung sowie der Summe der Fremdleistungen zu bestimmen und,
die Steuereinrichtung (15) eine Begrenzereinheit umfasst, die eingerichtet ist, falls die Summenleistung eine vorgegebene Maximalleistung überschreitet, das Motorventil zum Reduzieren der Wasserdurchflussmenge anzusteuern und über die Steuereinrichtung (15) die Heizleistung der Heizeinrichtung (13) zu reduzieren.

2. Durchlauferhitzer nach Anspruch 1, **dadurch gekennzeichnet, dass** die Steuereinrichtung (15) ausgebildet ist, die Heizleistung derart zu reduzieren, dass die Wassertemperatur des erwärmten Wassers bei reduzierter Wasserdurchflussmenge einer voreingestellten Solltemperatur entspricht.

3. Durchlauferhitzer nach einem der Ansprüche 1 oder 2, **dadurch gekennzeichnet, dass** die Steuereinrichtung (15) ausgebildet ist, zunächst die Heizleistung derart zu reduzieren, dass die Wassertemperatur des erwärmten Wassers bei reduzierter Wasserdurchflussmenge der voreingestellten Solltemperatur entspricht und, falls die reduzierte Wasserdurchflussmenge eine vorgegebene Mindestdurchflussmenge unterschreitet, schrittweise die Heizleistung unter Absenkung der Wassertemperatur des erwärmten Wassers unter die voreingestellte Solltemperatur zu reduzieren.

4. Durchlauferhitzer nach einem der Ansprüche 1 bis 3, **dadurch gekennzeichnet, dass** die Steuereinrichtung (15) ausgebildet ist, über die Schnittstelle von mindestens einem der weiteren Durchlauferhitzer 19 und/oder der Laststeuerzentrale 20 ein Leistungsreduktionsanforderungssignal zu erhalten und ausgebildet ist, auf Basis des Leistungsreduktionsanforderungssignals das Motorventil (16) zum Reduzieren der Wasserdurchflussmenge sowie zum Reduzieren der Heizleistung der Heizeinrichtung (13) anzusteuern.

5. Durchlauferhitzer nach einem der Ansprüche 1 bis 4, **dadurch gekennzeichnet, dass** die Schnittstelle weiter ausgebildet ist, Verbrauchsdaten mindestens eines der weiteren Durchlauferhitzer (19) an mindestens einen anderen der weiteren Durchlauferhitzer (19) weiterzuleiten.

6. Durchlauferhitzer nach einem der Ansprüche 1 bis 5, **dadurch gekennzeichnet, dass** die Steuereinrichtung (15) ausgebildet ist, während eines Einrichtbetriebs die zu einer Verbrauchsgruppe zugehörigen Durchlauferhitzer (18, 19) festzulegen und auf Basis der Einzelnennleistungen die vorgegebene Maximalleistung festzulegen.

7. Durchlauferhitzer nach Anspruch 6, **dadurch gekennzeichnet, dass** die Steuereinrichtung (15) ausgebildet ist, die festgelegte vorgegebene Maximalleistung über die Schnittstelle an die weiteren Durchlauferhitzer (19) zu kommunizieren.

8. Anordnung umfassend mindestens zwei Durchlauferhitzer (18, 19) nach einem der Ansprüche 1 bis 7, **dadurch gekennzeichnet, dass** die mindestens zwei Durchlauferhitzer (18, 19) zum Datenaustausch über deren Schnittstellen miteinander gekoppelt sind.

9. Verfahren zum Betreiben von Durchlauferhitzern (18, 19) zur Warmwasserbereitung, wobei die Durchlauferhitzer (18, 19) jeweils eine Kanalanordnung (10) mit einem Wasserzulauf (11), der zum Anschluss an eine wasserzuführende Wasserleitung eingerichtet ist, und mit einem Wasserablauf (12), der zum Anschluss an eine wasserabführende Wasserleitung eingerichtet ist, eine zum Erwärmen von durch die Kanalanordnung (10) in Durchflussrichtung (14) fließendem Wasser eingerichtete elektrische Heizeinrichtung (13), eine zum Steuern der Heizleistung der Heizeinrichtung (13) ausgebildete elektronische Steuereinrichtung (15) sowie ein in dem Wasserzulauf angeordnetes und zur steuervariablen Begrenzung der Wasserdurchflussmenge eingerichtetes, mittels der Steuereinrichtung (15) ansteuerbares, Motorventil (16) mit einem zur Einstellung des Volumenstroms eingerichteten Drosselorgan (17) umfasst,
**gekennzeichnet durch**
Ermitteln der von der Heizeinrichtung (13) aufgenommenen elektrischen Leistung mittels der Steuereinrichtung (15) und
Kommunizieren mit weiteren Durchlauferhitzern (19) und/oder mit einer Laststeuerzentrale (20) über mindestens eine hierzu eingerichtete Schnittstelle, um die von den weiteren Durchlauferhitzern (19) aufgenommene elektrische Fremdleistung und/oder die mittels der Laststeuerzentrale (20) ermittelte elektrische Fremdleistung zu bestimmen,
Ermitteln der Summenleistung aus der von der Heizeinrichtung (13) aufgenommenen elektrischen Leistung sowie der Summe der Fremdleistungen mittels einer Gesamtleistungsermittlungseinheit der Steuereinheit (15),
Reduzieren der Wasserdurchflussmenge durch Ansteuern des Motorventils (16) mittels einer Begrenzereinheit der Steuereinrichtung (15) und Reduzieren der Heizleistung der Heizeinrichtung (13) mittels der Steuereinrichtung (15), falls die Summenleistung eine vorgegebene Maximalleistung überschreitet.

10. Verfahren nach Anspruch 9, **gekennzeichnet durch** Reduzieren der Heizleistung mittels der Steuereinrichtung (15) derart, dass die Wassertemperatur des erwärmten Wassers bei reduzierter Wasserdurchflussmenge einer voreingestellten Solltemperatur entspricht.

11. Verfahren nach Anspruch 9 oder 10, **gekennzeichnet durch** anfängliches Reduzieren der Heizleistung mittels der Steuereinrichtung (15) derart, dass die Wassertemperatur des erwärmten Wassers bei reduzierter Wasserdurchflussmenge der voreingestellten Solltemperatur entspricht und, falls die reduzierte Wasserdurchflussmenge eine vorgegebene Mindestdurchflussmenge unterschreitet, schrittweises Reduzieren der Heizleistung unter Absenkung der Wassertemperatur des erwärmten Wassers unter die voreingestellte Solltemperatur.

12. Verfahren nach einem der Ansprüche 9 bis 11, **gekennzeichnet durch** Verarbeiten eines über die Schnittstelle von mindestens einem der weiteren Durchlauferhitzer (19) und/oder einer Laststeuerzentrale (20) eingehenden Leistungsreduktionsanforderungssignals und
Reduzieren der Wasserdurchflussmenge mittels des Motorventils (16) und Reduzieren der Heizleistung der Heizeinrichtung (13) auf Basis des Leistungsreduktionsanforderungssignals.

13. Verfahren nach einem der Ansprüche 9 bis 12, **gekennzeichnet durch** Weiterleiten von Verbrauchsdaten mindestens eines der weiteren Durchlauferhitzer (19) an mindestens einen anderen der weiteren Durchlauferhitzer (19) mittels der Schnittstelle.

14. Verfahren nach einem der Ansprüche 9 bis 13, **gekennzeichnet durch**
Festlegen der zu einer Verbrauchsgruppe zugehörigen Durchlauferhitzer (18, 19) während eines Einrichtbetriebs und
Festlegen der vorgegebenen Maximalleistung auf Basis der Einzelnennleistungen.

15. Verfahren nach Anspruch 14, **gekennzeichnet durch** Kommunizieren der festgelegten vorgegebenen Maximalleistung über die Schnittstelle an die weiteren Durchlauferhitzer (19).
